# EUROPEAN PATENT SPECIFICATION

(11) **EP 0 567 734 B1**
(45) Date of publication and mention of the grant of the patent: **08.11.1995**
(21) Application number: 93102918.5
(22) Date of filing: 25.02.1993
(51) Int. Cl.: B01F 1/00, B01F 3/12, A47J 31/00

(54) **Apparatus and method for wetting and dissolving dry particles**
Vorrichtung und Verfahren zum Benetzen und Auflösen von trockenen Partikeln
Appareil et procédé pour mouiller et dissoudre des particules sèches

(30) Priority: 16.03.1992 US 852054
(43) Date of publication of application: 03.11.1993
(73) Proprietor: SOCIETE DES PRODUITS NESTLE S.A., 1800 Vevey (CH)
(72) Inventor: Hsu, Sheng Hsiung, Marysville, OH 43040 (US)
(74) Representative: Vuille, Roman

(56) References cited:
- DE-A- 2 264 169

## Description

This invention relates to an apparatus and method for wetting and dissolving dry particles in a liquid. More particularly, the invention relates to an apparatus and method to wet and dissolve coffee particles, including finely divided coffee powder, in low temperature coffee liquor in a manner which increases the solids content of the coffee liquor while minimizing lumping, foaming and coffee quality degradation.

### BACKGROUND OF THE INVENTION

In the production of soluble coffee, a significant amount of commercially unacceptable dried coffee particles are produced. For example, conventional drying procedures, such as spray drying and freeze drying, result in the production of significant amounts of coffee fines, which typically have a particular size of less than about 0.5 mm, and are commercially undesirable. Such coffee fines usually are reprocessed so that while they are not included in commercial soluble coffee products, they are recovered to improve the economics of the production operation. That is, the coffee fines typically are added back to coffee liquor being processed in order to wet and dissolve the coffee particles in the liquor and thereby increase the total soluble solids level of the coffee liquor, which is recycled to the drying operation. However, because of their small particle size and hygroscopic character the coffee fines, when added to coffee liquor or other aqueous media, are difficult to wet and dissolve. The fine hygroscopic particles when contacted with coffee liquor or other aqueous media do not disperse but tend to form wet lumps having a gummy exterior surface and undissolved powder on the inside. In the past it has usually been necessary to heat the coffee liquor to an elevated temperature of about 90°C. in order to effect wetting and dissolution of the fines in the viscous coffee liquor. However, heating of the coffee liquor to such elevated temperatures is detrimental to the quality of the resulting soluble coffee product. In addition, even with such heating, complete dissolution of the coffee fines could rarely be achieved in commercial operations due to the inability to break up and dissolve all of the lumps. Moreover, the addition of coffee fines to coffee liquor or other aqueous media tends to cause undesirable foaming due to the incorporation of entrained air. Consequently the apparatus and procedures which have been used heretofore for reprocessing coffee fines in concentrated coffee liquor have tended to produce very foamy, partially dissolved solutions containing relatively large amounts of wet powder lumps.

An apparatus and method for wetting and dissolving particles is described in DE-A-2 264 169.

### SUMMARY OF THE INVENTION

The present invention is directed to an apparatus according to claim 1 and a method according to claim 12 for wetting and dissolving finely divided dry particles, such as dried coffee granules or fines, in a liquid, particularly concentrated coffee liquor. The apparatus includes a dissolving tank having a liquor supply conduit and a discharge conduit spaced from the supply conduit to maintain a predetermined level of coffee liquor in the tank. At least one pair, and preferably two or more pairs, of counter-rotating drums are mounted in the tank with the drums being partially immersed in the liquor. The drums in each pair of counter-rotating drums are mounted in close proximity to each other to provide a narrow nip between the counter-rotating drums. Drive means are provided to rotate the drums in a direction toward the nip between the counter rotating pair of drums. A solubilizing bar is mounted tangentially in close proximity to an upwardly rotating section of each of the drums below the level of liquid in the tank to define a gap between the bar and the surface of the adjacent drum, with the gap converging in the direction of rotation of the drum.

Positioned above the dissolving tank is a feeding device including a hopper in which coffee particles, such as granules or powder, are stored, and an inclined vibrating tray from which the particles fall downwardly in a curtain of particles over substantially the full axial length of one of the drums in each pair of counter rotating drums.

A solubilizing filter is mounted in communication with the discharge conduit from the dissolving tank to effect complete dissolution of any powder lumps which may remain in the solution discharged from the dissolving tank. The solubilizing filter comprises a cylindrical screen member formed from a series of wedge-shaped elements secured in adjoining relationships at their bases in close proximity to one another to define a narrow gap between adjacent wedges which becomes increasingly smaller from the apex or upstream end of the wedges to the base or downstream end thereof. Any powder lumps present in the liquor introduced into the solubilizing filter are disintegrated and dissolved by passage through the narrow gap between the base portions of adjacent wedges. The liquor stream discharged from the filter comprises coffee liquor of increased solids content which is free of undissolved lumps of powder, and may be further processed by conventional procedures in the production of soluble coffee products.

In the operation of the apparatus, rotation of the partially immersed drums in the body of liquor in the dissolving tank causes a thin film of the liquor to be carried on the surface of the drums as they emerge from the liquor. Coffee particles from the hopper are discharged from the vibrating tray as a falling curtain of particles onto one of each pair of counter-rotating drums in the dissolving tank, where powder particles are initially wetted by the film of liquor carried on the surface of the drums. Due to the small particle size of the powder and their hygroscopic nature, a portion of the wetted particles tend to form wet powder lumps on the surface of the drum with the lumps having a gummy exterior surface and undissolved powder on the inside. The wetted coffee powder and wet powder lumps are carried on the surface of the drums into the nip between the adjacent counter-rotating drums where the powder lumps are compressed, kneaded and sheared during passage through the nip to break up most of the lumps and more completely wet the coffee powder. The wetted particles passing through the nip are carried into the body of liquor in the dissolving tank upon continued rotation of the drums and dissolve in the liquor to increase the solids content of the coffee liquor. As the drums are rotated past the submerged solubilizing bars, any powder lumps remaining are carried into the converging gap between the periphery of the drum and the solubilizing bar where the powder lumps are abraded against the bars to disintegrate any lumps, with the powder being dissolved in the coffee liquor. Coffee liquor discharged form the dissolving tank has an increased solids content and is substantially free of wet powder lumps.

Any trace amounts of wet powder lumps which may remain in the liquor are removed by passing the liquor discharged from the dissolving tank through the cylindrical solubilizing filter in which the liquor is passed through the converging gap between adjacent wedges. Any wet powder lumps remaining in the liquor are subject to abrading and shearing as they pass through the converging gap to disintegrate and dissolve the lumps in the liquor. Liquor discharged from the solubilizing filter is free of lumps.

The apparatus and method of this invention are effective in dissolving hygroscopic particles, including finely divided coffee powder in cold coffee liquor in a manner in which lumping, foaming and coffee quality degradation are minimized. The temperature of the coffee liquor preferably is maintained in the range of about 5°C to 15°C during passage through the dissolving tank, but may range from about 5°C to 60°C. Higher temperatures may be used but are generally not preferred since higher temperatures are detrimental to coffee quality. Typically the solids content of the coffee liquor is increased by about 3-5% or more, during passage through the dissolving tank.

### DESCRIPTION OF THE DRAWINGS

FIG. 1 is a schematic representation of particle wetting and dissolving system of the present invention.

FIG. 2 is a sectional view of the solubilizing filter used in the wetting and dissolving system of this invention.

### DESCRIPTION OF THE INVENTION

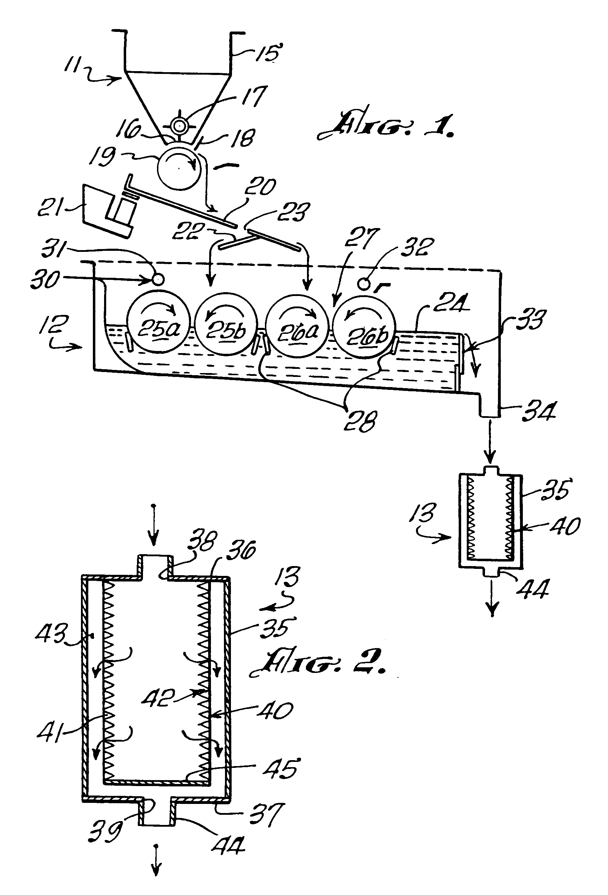

Referring now to Fig. 1, there is illustrated a system for wetting and dissolving hygroscopic coffee particles in coffee liquor. While the invention will be described in particular with respect to dissolving coffee fines which typically have a particle size of less than about 0.5 mm in coffee liquor, it will be understood, that the system and method of this invention may be used in wetting and dissolving other particulate materials in liquids. For example, the system and method of this invention may be used to wet and dissolve regular freeze-dried coffee granules, which typically have particle sizes ranging from about 0.5 to 2.5 mm, produced in commercial freeze drying operations but which for some reason are not commercially acceptable, in coffee liquor. In general, the invention may be used to wet and dissolve hygroscopic particles in an aqueous liquid.

The system of this invention includes a feeding device 11, a dissolving tank 12 positioned below the feeding device, and a solubilizing filter 13 which is mounted in communication with the discharge outlet of the dissolving tank. Feeding device 11 includes a hopper 15 in which the coffee fines are stored. Hopper 15 has an outlet 16 at the base thereof for discharging the coffee fines, and an agitating roller 17 mounted across the hopper, adjacent the outlet, to prevent the coffee fines from packing together in the hopper. In accordance with a preferred embodiment, hopper 15 is rectangular in shape, having a length of about 1 meter. A distributing bar 18 is mounted on the base of the hopper at outlet 16 to facilitate uniform discharge of powdered fines from the hopper. Mounted across the base of the hopper adjacent and below outlet 16 is an elongated metering roller 19, having an axial length which is coextensive with the length of outlet 16, onto which powdered fines discharged from the hopper are deposited over substantially the axial length of the metering roller. Metering roller 19 and agitating roller 17 are driven by a single drive motor (not shown) through conventional sprocket and chain drives to set the powder feed rate to the system.

An inclined powder feed tray 20, which is substantially coextensive in width with the axial length of roller 19, is mounted under metering roller 19 to receive powdered fines discharged from the roller. One or more vibrator units 21 are secured to the underside of the feed tray 20 at the upper or feed end of the tray. In the embodiment illustrated in Fig. 1 a secondary inclined feed tray 22 is secured to the underside of tray 20 adjacent the discharge end of tray 20, with tray 22 extending in a direction opposite to that of tray 20 but at approximately the same angle as that at which feed tray 20 is disposed. A series of openings 23 are provided across the width of feed tray 20, with the openings 23 being spaced apart a distance equal to or slightly greater than the width of the openings 23. In this manner about one-half of the particles falling from metering roller 19 onto tray 20 pass through openings 23 onto secondary feed tray 22 from which they are discharged, while the other one-half of the particles pass between the openings and are discharged from the lower end of tray 20.

Dissolving tank 12, which is in the form of a receptacle adapted to contain a body of liquid 24, such as cold concentrated coffee liquor, is mounted under the lower or discharge ends of trays 20 and 22. At least one pair of counter-rotating drums is mounted in the tank, with the drums extending substantially across the width of the tank and having an axial length substantially equal to the width of the feed tray. In accordance with a preferred embodiment of the invention two pairs of counter-rotating drums 25a-25b and 26a-26b are mounted in the tank with the lower portion of each roller being submerged in the body of liquor 24 in the tank. A relatively narrow nip 27 typically on the order between about 6-12 mm in width is provided between the drums in each counter-rotating pair. The pairs of drums are rotated in the directions indicated by the arrows in Fig. 1 by a drive motor (not shown) located outside the tank through conventional gearing so that all of the drums are rotating at the same speed, typically from 5 to 25 rpm. A thin, substantially continuous layer of liquor adheres to the surface of the drums as they are rotated out of the body of liquor, with the liquor layer being retained on the drums as they are rotated through the nip. In accordance with a preferred embodiment, a meshed wire or cloth, such as 6-mesh wire cloth, is mounted on the surface of the drums to facilitate formation and retention of the liquor layer on the surface of the drums.

The pairs of counter-rotating drums are positioned in the tank so that coffee fines discharged from feed tray 20 are deposited on the liquor layer on the surface of drum 26a, and coffee fines discharged from secondary feed tray 22 are deposited on the liquor layer on the surface of drum 25b, with the fines being deposited over substantially the axial length of the drums. The particles deposited on the liquor layer of the drums become wetted by the liquor and tend to form wet lumps on the surface of the drums. Continued rotation of the drums carries the wetted particles and lumps through the nip 27, in which the particles are further wetted and the lumps are compressed, kneaded and sheared to break up the lumps, with the wetted particles then being dissolved in the liquor body.

A solubilizing bar 28 is mounted in close proximity to each of the drums adjacent on upwardly rotating section of the lower half of the drums, with each of the solubilizing bars being submerged in the body of liquor in the dissolving tank 12. Each of the solubilizing bars is mounted tangentially to a drum and extends parallel to and over the entire axial length of the drum to define a converging gap between the solubilizing bar and the adjacent drum which converges the direction of rotation of the drum. This gap, which is on the order of about 3 mm to 6 mm in width at the upper end of the solubilizing bar, serves to compress, abrade, condition and dissolve powder lumps present in the body of liquor in the tank. The solubilizing bar may be a solid plate or may be provided with a series of perforations extending across the bar.

Liquid, preferably cold concentrated coffee liquor such as, for example, coffee liquor having a solids content of about 35% - 45% and a temperature of about 5°C to 15°C, is pumped to dissolving tank 12 in inlet conduit 30 and carried to distribution pipes 31, 32 in the tank. Distribution pipe 31 is mounted above drum 25a over the length of the drum and has a series of openings along its length which uniformly distribute inlet liquor onto the axial length of the drum. Distribution pipe 32, mounted above drum 26b, also extends over the length of the drum and also includes a series of openings which distribute the inlet liquor onto the axial length of drum 26b. A flow meter (not shown) preferably is provided in inlet conduit 30 to measure and control the rate of liquor flow into the dissolving tank.

An adjustable flow gate 33 is mounted across the width of dissolving tank 12 adjacent one end thereof to maintain a predetermined level of liquor in the tank. Preferably the liquor level in the tank is maintained at or slightly below the horizontal center of the drums. A liquor discharge conduit 34 is secured to the base of discharge tank 12 at the end of the tank adjacent the flow gate 33 to receive liquor which flows over gate 33.

Concentrated liquor containing dissolved coffee fines discharged from tank 12 is carried through conduit 34 to solubilizing filter 13 in which any wet powder lumps or portions of such lumps remaining in the liquor are abraded, sheared and dissolved. Referring now to Fig. 2, it can be seen that solubilizing filter 13 includes a cylindrical shell 35 closed at its top and bottom ends by caps 36 and 37 respectively, with both of the caps having an opening 38, 39 extending therethrough. Conduit 34 is secured to cap 36 at opening 38 to introduce concentrated liquor discharged from tank 12 into solubilizing filter 13. Mounted concentrically within shell 35 is a tubular filter 40 which comprises a plurality of metal wedges 41 secured in close proximity to each other at the base of the wedges in a coplanar relationship and formed into a cylinder, with the base of the wedges forming the outer surface of the cylinder and the apex of the wedges forming the inner surface of the cylinder. As shown in Fig. 2, a converging gap 42 is formed between adjacent wedges, with the gap having a width of about 0.075 mm to 0.20 mm at the base of the wedges. The filter 40 is secured at its upper end to the inner surface of cap 36 and is closed at its lower end by plate 45. Concentrated liquor from dissolving tank 12 introduced into the interior of tubular filter 40 flows outwardly through the converging gap 42 between adjacent wedges 41 of the filter into annular chamber 43 provided between the filter and cylindrical shell 35 from which it is discharged through conduit 44. As the liquor flows through the narrow, converging gap 42 any wet powder lumps present in the liquor are compressed, abraded, sheared and dissolved in the liquor. The liquor discharged from solubilizing filter is free of wet powder lumps and is used in further conventional processing operations, such as freeze drying or spray drying of the coffee liquor to produce soluble coffee products.

A typical operation of the system will now be described to illustrate the practice of this invention in which coffee fines are dissolved in low temperature concentrated coffee liquor in the system illustrated in Fig. 1. Because of its viscous nature, the concentrated liquor tends to produce very foamy, partially dissolved solutions when used in prior wetting and dissolving systems for the recovery of coffee fines.

In this exemplary embodiment, concentrated coffee liquor having a solids content of between 39% to 41% and a temperature of about 8°C to 10°C is pumped into dissolving tank 12 via inlet conduit 30 and distribution pipes 31 and 32 from which the liquor is sprayed onto the surfaces of rotating drums 25a and 26b. Flow gate 33 is positioned so as to maintain the liquor level in the tank slightly below the horizontal midpoint of the drums. The drums, each of which has a diameter of 15.24 cm and an axial length of about 1m, are positioned so that the nip 27 between counter-rotating drums is 9.5 mm. Rotation of the drums in the body of liquor in the tank causes a thin layer of liquor to adhere to the surface of the drum as it is rotated out of the liquor body, with the liquor layer being retained on the drum surface as it passes through nip 27.

Coffee fines having an average particle size of 75 to 120 micrometers, stored in hopper 15, are discharged onto metering roller 19, which is rotating at about 3 rpm, to provide a powder feed rate to the system of about 54 kg per hour, and onto vibrating feed tray 20. Openings 23, which extend across the width of the feed tray, are about 10 mm in diameter, separated by a distance of about 15 mm, so that about one-half of the coffee fines moving down tray 20 fall through the openings onto secondary feed tray 22 while the remaining coffee fines pass between the openings and are retained on tray 20. The coffee fines are discharged from the ends of trays 20 and 22 as a falling curtain of particles onto the layer of liquor on the surface of drums 25b and 26a over substantially the axial length of the drums. Upon contact with the liquor layer, the particles become wetted. Due to the hygroscopic nature of coffee fines, the wetted particles tend to form wet sticky lumps on the surface of the drums. Continued rotation of the drums in the direction of the arrows shown in Fig. 1, carries the particles into the nip 27 between the adjacent counter-rotating drums where the wet lumps are compressed, kneaded and sheared to break up most of the lumps.

The wetted particles and remaining lump portions are carried into the liquor body by continued rotation of the drums where substantially all of the particles are dissolved in the liquor. Wet lumps of undissolved coffee fines which remain in the liquor are carried into the converging gap between the drums and solubilizing bars 28. As the wet powder lumps pass through the narrow gap (about 5 mm) they are compressed and abraded to break, condition and dissolve substantially all of the wet lumps. Coffee liquor which flows over flow gate 33 and is carried away from tank 12 typically has a solids content of about 3% to 5% or more greater than that of the liquor supplied to the tank, while the temperature of the liquor is increased only a few degrees during passage through the tank.

The liquor leaving tank 12 is pumped to filter 13 in which it flows through tubular filter 40 which is formed of wedges having a gap of about 0.076 mm to 0.15 mm between the base of adjoining wedges. Any minor amounts of wet lumps which may be present in the liquor are abraded, sheared and dissolved as the liquor flows through the gaps in the wedge filter. Concentrated coffee liquor discharged from filter 13 is pumped to a holding tank for subsequent processing in producing dried soluble coffee.

The timing of all drums and rollers in the system is controlled by gearing in which a single drive motor drives all of the drums and rollers through sprocket and chain drives. The positioning and timing of the various gears is within the skill of those in the machine art.

Thus, the present invention provides a system and method for wetting and dissolving coffee fines in cold concentrated coffee liquor in which foaming, the presence of wet lumps in the liquor and coffee quality degradation are avoided.

## Claims

1. An apparatus for wetting and dissolving finely divided dry particles in a liquid which comprises
a dissolving tank (12) having liquid supply means (30, 31, 32) and discharge means (34), gate means (33) in said tank intermediate said supply means and liquid discharge means to provide a body of liquid (14) of predetermined level in said tank,
at least one pair of axially aligned counter-rotating drums (25a, 25b, 26a, 26b) mounted in said tank and partially submerged in said body of liquid, the drums in each of said pairs being mounted in close proximity to define a nip (27) therebetween,
means for rotating each drum in each of said counter-rotating pairs toward said nip,
a solubilizing (28) bar tangentially mounted substantially parallel and in close proximity to an upwardly rotating section of each drum, said bar being submerged in the body of liquid, and said bar extending over substantially the entire axial length of the drum to provide a converging gap between the bar and the surface of the adjacent drum,
feeding means (11) mounted above the dissolving tank for depositing the dry particles onto one of the drums in each counter-rotating pair, and
cylindrical filter means (13) comprising a plurality of converging gaps (42) in communication with the liquid discharge means of said tank to receive liquid from the tank to pass the liquid through the converging gaps to disintegrate and dissolve any solid particles in the liquid.

2. The apparatus defined in claim 1 in which the gate means comprises an adjustable flow gate (33) mounted across the dissolving tank (12) adjacent one end thereof to maintain a level of liquid (14) in said tank sufficient to partially submerge said drums 25a, 25b, 26a, 26b.

3. The apparatus defined in claim 1 in which two pairs of counter-rotating drums 25a, 25b, 26a, 26b are mounted in the tank (12), with the drums in both pairs of drums being mounted in close proximity and being rotated in a direction toward the nip (27) between the drums.

4. The apparatus defined in claim 3 in which the nip (27) between the drums 25a, 25b, 26a, 26b in both pairs of drums is between about 6 mm to 12 mm in width.

5. The apparatus defined in claim 3 in which the feeding means (11) is mounted such that the dry particles can be deposited over substantially the entire axial length of one of the drums 25a, 25b, 26a, 26b in each counter-rotating pair.

6. The apparatus defined in claim 5 in which the liquid supply means includes distribution conduits (31, 32) mounted above the drums 25a, 25b, 26a, 26b to distribute liquid onto the surface of one of the drums in each counter-rotating pair over substantially the entire axial length of the drums.

7. The apparatus defined in claim 3 in which a solubilizing bar (28) is mounted adjacent each of the drums 25a, 25b, 26a, 26b, with each solubilizing bar being positioned tangential to an upwardly rotating section of the adjacent drum.

8. The apparatus defined in claim 1 in which said filter means (13) comprises a plurality of wedge elements (41) secured in close proximity to one another in a coplanar relationship at the base of the wedges and formed into a cylindrical shape, with the base of the wedges forming the outer surface of the filter and the apex of the wedges forming the inner surface of the filter to define a converging gap (42) between adjacent wedges.

9. The apparatus defined in claim 3 in which said feeding means (11) includes a hopper (15) for storing dry particles, said hopper having an outlet (16) for discharging the dry particles, a metering roller (19) mounted adjacent and below said outlet to control the rate of particle discharge from the hopper, a vibrating inclined feed tray means (20) mounted under the metering roller to receive dry particles discharged from the metering roller, with the end of the feed tray means remote from the metering roller being positioned to deposit a curtain of dry particles over substantially the entire axial length of one of said drums 25a, 25b, 26a, 26b of the counter-rotating pairs of drums.

10. The apparatus defined in claim 9 in which said feed tray means includes a first inclined feed tray (20) having an inlet end mounted below said metering roll and a discharge end positioned above a drum in one of the pair of counter-rotating drums (25a, 25b, 26a, 26b) in the dissolving tank (12), and a second inclined feed tray (22) mounted on the bottom surface of said first feed tray adjacent the discharge end thereof and extending in a direction opposite to that of the first feed tray, with said second feed tray having a discharge end positioned above a drum in the other pair of counter-rotating drums, said first feed tray having a plurality of spaced openings (23) across the width of the tray above said second feed tray, so that a portion of the dry particles carried on the first feed tray falls through said openings onto the second feed tray and is discharged therefrom, and so that the remainder of the dry particle passes between the spaced openings and are discharged from the end of the first feed tray.

11. The apparatus defined in claim 10 in which the openings (23) in the first feed tray (20) are spaced apart a distance at least equal to the width of the openings.

12. A method for wetting and dissolving finely divided dry particles in a liquid which comprises,
establishing a body of liquid (14) in a tank (12),
mounting at least one pair of counter-rotating drums (25a, 25b, 26a, 26b) in the tank, with the drums being partially submerged in the body of liquid and the drums in each counter-rotating pair being mounted parallel and in close proximity to one another to define a nip (27) between the counter-rotating drums,
rotating the drums so that both drums in each counter-rotating pair are rotated in a direction toward said nip, and so that a layer of the liquid adheres to the surface of each drum as it rotates out of said body of liquid,
depositing a layer of dry particles on the liquid layer on the surface of a rotating drum in each counter-rotating pair so that the particles are wetted and form wet powder lumps on the surface of the drums,
carrying the wetted particles and wet powder lumps on the surface of the drums through said nip, to compress, knead and break up substantially all of the powder lumps, and into the body of liquid to dissolve the wetted particles therein,
rotating each of said drums into a converging gap provided by a stationary bar (28) mounted in the liquid body tangential to an upwardly rotating section of each of the drums so that substantially all of the wet powder lumps are abraded and disintegrated during passage through said converging gap and are dissolved in said liquid,
removing the liquid solution containing dissolved particles from the tank,
passing the liquid removed from the tank through a plurality of converging gaps (42) in a cylindrical filter (13) so that any remaining powder lumps in the liquid are abraded, sheared and disintegrated by passage through the gaps with the particles being dissolved in the liquid, and
discharging from said filter liquid which is free from powder lumps.

13. The method defined in claim 12 in which the dry particles comprise coffee fines having an average particle size of about 75 to 120 micrometers.

14. The method defined in claim 13 in which the liquid is concentrated coffee liquor having a solids content of about 25% or more and a temperature of about 5°C to 60°C, with the solids content of the liquor being increased by about 3% to 5% or more and the temperature of the liquor being increased by about less than 10°C during the period the liquor remains in said tank (12).

15. The method defined in claim 12 in which two pair of counter-rotating drums (25a, 25b, 26a, 26b) are provided in the tank (12), with the powder particles being deposited on one of each pair of drums, so that the wet powder lumps formed on the surface of the drums are carried into the nip (27) of both pairs of drums to compress, knead and break up powder lumps in both pairs of drums.

16. The method defined in claim 12 in which the liquid removed from the tank (12) is passed through converging gaps having a width of from about 0.075 mm to 0.20 mm.

## Patentansprüche

1. Eine Vorrichtung zum Benetzen und Auflösen von fein verteilten trockenen Teilchen in einer Flüssigkeit, die umfaßt
einen Auflösungstank (12) mit einer Flüssigkeits-Zuführeinrichtung (30, 31, 32) und einer -Ableiteinrichtung (34), einer Staueinrichtung (33) in dem genannten Tank zwischen der genannten Zuführeinrichtung und der Flüssigkeitsableiteinrichtung, um in dem genannten Tank einen Körper aus einer Flüssigkeit (14) mit einem vorgegebenen Flüssigkeitsspiegel zu bilden,
wenigstens ein Paar von axial ausgerichteten gegenläufig rotierenden Trommeln (25a, 25b, 26a, 26bd), die in dem genannten Tank montiert sind und teilweise in den genannten Flüssigkeitskörper eintauchen, wobei die Trommeln eines jeden der genannten Paare nahe benachbart montiert sind, so daß zwischen ihnen ein Walzenspalt (27) gebildet wird,
eine Einrichtung zum Rotieren einer jeden Trommel eines jeden der genannten gegenläufig rotierenden Paare auf den Walzenspalt zu,
eine Solubilisierschiene (28), die tangential im wesentlichen parallel und in unmittelbarer Nähe eines nach oben rotierenden Abschnitts einer jeden Trommel montiert ist, wobei die genannte Schiene unter dem Spiegel des Flüssigkeitskörpers angeordnet ist, und wobei die genannte Schiene sich im wesentlichen über die gesamte axiale Länge der Trommel erstreckt, so daß ein konvergierender Spalt zwischen der Schiene und der Oberfläche der angrenzenden Trommel gebildet wird,
eine Einspeiseinrichtung (11), die oberhalb des Auflösungstanks montiert ist, um die trockenen Teilchen auf eine der Trommeln eines jeden gegenläufig rotierenden Paars abzulegen, und
eine zylindrische Filtereinrichtung (13) mit einer Vielzahl von konvergierenden Spalten (42) in Verbindung mit der Flüssigkeitsableiteinrichtung aus dem Tank, die Flüssigkeit aus dem Tank aufnimmt und die Flüssigkeit durch die konvergierenden Spalte hindurchleitet, um jegliche feste Teilchen in der Flüssigkeit zu zerlegen und aufzulösen.

2. Vorrichtung nach Anspruch 1, bei der die Staueinrichtung eine einstellbare Überlaufsperre (33) aufweist, die quer zu dem Auflösungstank (12) in der Nähe eines seiner Enden montiert ist, um in dem genannten Tank einen Flüssigkeitsspiegel (14) aufrechtzuerhalten, der ausreicht, daß die genannten Trommeln (25a, 25b, 26a, 26b) teilweise eintauchen.

3. Vorrichtung nach Anspruch 1, bei der zwei Paare von gegenläufig rotierenden Trommeln (25a, 25b, 26a, 26b) in dem Tank (12) montiert sind, wobei die Trommeln in beiden Paaren von Trommeln in enger Nachbarschaft montiert sind und in einer Richtung auf den Walzenspalt (27) zwischen den Trommeln zu rotieren.

4. Vorrichtung nach Anspruch 3, bei der der Walzenspalt (27) zwischen den Trommeln (25a, 25b, 26a, 26b) von beiden Paaren von Trommeln eine Weite zwischen etwa 6 mm bis 12 mm aufweist.

5. Vorrichtung nach Anspruch 3, bei der die Einspeiseinrichtung (11) so montiert ist, daß die trockenen Teilchen über im wesentlichen die gesamte axiale Länge einer der Trommeln (25a, 25b, 26a, 26b) eines jeden Paares von gegenläufig rotierenden Trommeln abgelegt werden.

6. Vorrichtung nach Anspruch 5, bei der die Flüssigkeitszuführeinrichtung Verteilungsleitungen (31, 32) einschließt, die über den Trommeln (25a, 25b, 26a, 26b) montiert sind, um Flüssigkeit auf der Oberfläche von einer der Trommeln eines jeden Paars von gegenläufig rotierenden Trommeln über im wesentlichen die ganze axiale Länge der Trommel zu verteilen.

7. Vorrichtung nach Anspruch 3, bei der eine Solubilisierschiene (28) angrenzend an jede der Trommeln (25a, 25b, 26a, 26b) montiert ist, wobei jede Solubilisierschiene tangential zu einem nach oben rotierenden Abschnitt der angrenzenden Trommel angeordnet ist.

8. Vorrichtung nach Anspruch 1, bei der die genannte Filtereinrichtung (13) eine Vielzahl von Keilelementen (41) aufweist, die in enger Nachbarschaft zueinander in einer koplanaren Anordnung bezüglich der Basis der Keile angeordnet sind und zu einer Zylinderform ausgeformt sind, wobei die Basis der Keile die Außenoberfläche des Filters bildet und die Spitzen der Keile die Innenoberfläche des Filters bilden, so daß zwischen benachbarten Keilen ein konvergierender Spalt (42) gebildet wird.

9. Vorrichtung nach Anspruch 3, bei der die genannte Einspeiseinrichtung (11) einen Bunker (15) zur Bevorratung trockener Teilchen aufweist, wobei der genannte Bunker einen Auslaß (16) zur Abgabe der trockenen Teilchen aufweist, eine Dosierwalze (19), die angrenzend an und unterhalb des genannten Auslasses montiert ist, um die Abgabemenge der aus dem Bunker abgegebenen Teilchen zu steuern, eine geneigte Rüttel-Zufuhrbodeneinrichtung (20), die unterhalb der Dosierwalze angeordnet ist und die trockenen Teilchen aufnimmt, die aus der Dosierwalze abgegeben werden, wobei das Ende des von der Dosierwalze entfernten Zufuhrbodens so angeordnet ist, daß ein Schleier von trockenen Teilchen über im wesentlichen die gesamte axiale Länge von einer der genannten Trommeln (25a, 25b, 26a, 26b) eines Paars von gegenläufig rotierenden Trommeln abgeschieden wird.

10. Vorrichtung nach Anspruch 9, bei der die genannte Zufuhrbodeneinrichtung einen ersten geneigten Zufuhrboden (20) mit einem Aufnahmeende aufweist, das unterhalb der genannten Dosierwalze angeordnet ist, sowie ein Abgabeende, das oberhalb einer Trommel eines der Paare von gegenläufig rotierenden Trommeln (25a, 25b, 26a, 26b) in dem Auflösungstank (12) angeordnet ist, sowie einen zweiten geneigten Zufuhrboden (22), der an der Bodenfläche des genannten ersten Zufuhrbodens in der Nähe von dessen Abgabeende montiert ist und sich in einer Richtung erstreckt, die der des ersten Zufuhrbodens entgegengesetzt ist, wobei der genannte zweite Zufuhrboden ein Abgabeende aufweist, das oberhalb einer Trommel des anderen Paars von gegenläufig rotierenden Trommeln angeordnet ist, wobei der genannte erste Zufuhrboden eine Vielzahl von beabstandeten Öffnungen (23) über die Breite des Bodens oberhalb des genannten zweiten Zufuhrbodens aufweist, so daß ein Teil der trockenen Teilchen, die von dem ersten Zufuhrboden getragen werden, durch die genannten Öffnungen auf den zweiten Zufuhrboden fällt und von diesem abgegeben wird, und so daß der Rest der trockenen Teilchen zwischen den beabstandeten Öffnungen hindurchläuft und vom Ende des ersten Zufuhrbodens abgegeben wird.

11. Vorrichtung nach Anspruch 10, bei der die Öffnungen (23) in dem ersten Zufuhrboden (20) voneinander in einem Abstand angeordnet sind, der wenigstens der Breite der Öffnungen gleich ist.

12. Verfahren zum Benetzen und Auflösen von fein verteilten trockenen Teilchen in einer Flüssigkeit, das umfaßt
Ausbilden eines Flüssigkeitskörpers (14) in einem Tank (12),
Montieren von wenigstens einem Paar von gegenläufig rotierenden Trommeln (25a, 25b, 26a, 26b) in dem Tank, wobei die Trommeln teilweise in den Flüssigkeitskörper eintauchen und wobei die Trommeln eines jeden gegenläufig rotierenden Paars parallel und in enger Nachbarschaft zueinander montiert sind, so daß ein Walzenspalt (27) zwischen den gegenläufig rotierenden Trommeln gebildet wird,
Rotieren der Trommeln auf eine Weise, daß beide Trommeln in jedem gegenläufig rotierenden Paar in eine Richtung auf den genannten Walzenspalt (27) zu rotieren, so daß eine Schicht von Flüssigkeit an der Oberfläche einer jeden Trommel haftet, während diese aus dem genannten Flüssigkeitskörper herausrotiert,
Ablegen einer Schicht von trockenen Teilchen auf der Flüssigkeitsschicht der Oberfläche einer rotierenden Trommel in einem jeden gegenläufig rotierenden Paar, so daß die Teilchen benetzt werden und feuchte Pulverklumpen auf der Oberfläche der Tommeln bilden,
Weitertragen der befeuchteten Teilchen und der nassen Pulverklumpen auf der Oberfläche der Trommeln durch den genannten Walzenspalt hindurch, um im wesentlichen alle Pulverklumpen zusammenzudrücken, zu kneten und aufzubrechen, sowie in den Flüssigkeitskörper, um die befeuchteten Teilchen darin aufzulösen,
Rotieren einer jeden der genannten Trommeln auf einen konvergierenden Spalt zu, der von einer stationären Schiene (28) gebildet wird, die in dem Flüssigkeitskörper tangential zu einem nach oben rotierenden Abschnitt einer jeden der Trommeln montiert ist, so daß im wesentlichen alle nassen Pulverklumpen während des Durchtritts durch den konvergierenden Spalt abgeschabt und zerlegt werden und in der genannten Flüssigkeit aufgelöst werden,
Entfernen der flüssigen Lösung, die die aufgelösten Teilchen enthält, aus dem Tank,
Hindurchleiten der aus dem Tank entfernten Flüssigkeit durch eine Vielzahl von konvergierenden Spalten (42) in einem zylindrischen Filter (13), so daß jegliche restliche Pulverklumpen in der Flüssigkeit infolge eines Durchtritts durch die Spalten abgeschliffen, geschert und zerlegt werden, wobei die Teilchen in der Flüssigkeit aufgelöst werden, und
Abführen von Flüssigkeit, die frei von Pulverklumpen ist, aus dem genannten Filter.

13. Verfahren nach Anspruch 12, bei dem die trockenen Teilchen Kaffeefeinstoffe mit einer mittleren Teilchengröße von etwa 75 bis 120 µm aufweisen.

14. Verfahren nach Anspruch 13, bei der die Flüssigkeit eine konzentrierte Kaffeeflüssigkeit mit einem Feststoffgehalt von etwa 25 % oder mehr und einer Temperatur von etwa 5 °C bis 60 °C ist, wobei der Feststoffgehalt der Flüssigkeit während des Zeitraums, für den die Flüssigkeit in dem genannten Tank (12) verweilt, um etwa 3 bis 5 % oder mehr und die Temperatur der Flüssigkeit um etwa weniger als 10 °C erhöht werden.

15. Verfahren nach Anspruch 12, bei dem zwei Paare von gegenläufig rotierenden Trommeln (25a, 25b, 26a, 26b) in dem Tank (12) vorhanden sind, wobei die Pulverteilchen auf eine Trommel eines jeden Paars abgelegt werden, so daß die nassen Pulverklumpen, die auf der Oberfläche der Trommeln gebildet werden, in den Walzenspalt (27) von beiden Paaren von Trommeln überführt werden, um die Pulverklumpen von beiden Paaren von Trommeln zusammenzudrücken, zu kneten und aufzubrechen.

16. Verfahren nach Anspruch 12, bei dem die aus dem Tank (12) abgeleitete Flüssigkeit durch konvergierende Spalten mit einer Weite von etwa 0,075 mm bis 0,20 mm hindurchgeführt wird.

## Revendications

1. Appareil pour mouiller et dissoudre des particules déshydratées, finement divisées, dans un liquide, qui comporte
une cuve (12) de dissolution ayant des moyens (30, 31, 32) d'alimentation en liquide et des moyens (34) de décharge, des moyens (33) à vanne dans ladite cuve entre lesdits moyens d'alimentation et des moyens de décharge de liquide pour établir une masse de liquide (14) d'un niveau prédéterminé dans ladite cuve,
au moins une paire de tambours (25a, 25b, 26a, 26b) alignés axialement, tournant dans des sens contraires, montés dans ladite cuve et partiellement immergés dans ladite masse de liquide, les tambours de chacune desdits paires étant montés à proximité étroite pour définir entre eux une zone de serrage (27),
des moyens destinés à faire tourner chaque tambour de chacune desdites paires tournant dans des sens contraires vers ladite zone de serrage,
une barre (28) de solubilisation montée tangentiellement, sensiblement parallèlement à et à proximité étroite d'une section tournant vers le haut de chaque tambour, ladite barre étant immergée dans la masse de liquide, et ladite barre s'étendant sensiblement sur toute la longueur axiale du tambour pour former un intervalle convergent entre la barre et la surface du tambour adjacent,
des moyens d'alimentation (11) montés au-dessus de la cuve de dissolution pour déposer les particules déshydratées sur l'un des tambours de chaque paire de tambours tournant dans des sens contraires, et
un moyen à filtre cylindrique (13) comprenant plusieurs intervalles convergents (42) en communication avec les moyens de décharge de liquide de ladite cuve pour recevoir du liquide de la cuve afin de faire passer le liquide dans les intervalles convergents pour désintégrer et dissoudre toutes particules solides dans le liquide.

2. Appareil selon la revendication 1, dans lequel les moyens à vanne comprennent une vanne d'écoulement réglable (33) montée à travers la cuve (12) de dissolution à proximité immédiate de l'une de ses extrémités afin de maintenir un niveau de liquide (14) dans ladite cuve suffisant pour immerger partiellement lesdits tambours (25a, 25b, 26a, 26b).

3. Appareil selon la revendication 1, dans lequel deux paires de tambours (25a, 25b, 26a, 26b), tournant dans des sens contraires, sont montées dans la cuve (12), les tambours des deux paires de tambours étant montés à proximité étroite et étant mis en rotation dans un sens allant vers la zone de serrage (27) entre les tambours.

4. Appareil selon la revendication 3, dans lequel la zone de serrage (27) entre les tambours (25a, 25b, 26a, 26b) des deux paires de tambours a une largeur comprise entre environ 6 mm et 12 mm.

5. Appareil selon la revendication 3, dans lequel les moyens (11) d'alimentation sont montés de façon que les particules déshydratées puissent être déposées sur pratiquement toute la longueur axiale de l'un des tambours (25a, 25b, 26a, 26b) de chaque paire de tambours tournant en sens contraires.

6. Appareil selon la revendication 5, dans lequel les moyens d'alimentation en liquide comprennent des conduits (31, 32) de distribution montés au-dessus des tambours (25a, 25b, 26a, 26b) pour distribuer du liquide sur la surface de l'un des tambours de chaque paire de tambours tournant en sens contraires, sur pratiquement toute la longueur axiale des tambours.

7. Appareil selon la revendication 3, dans lequel une barre (28) de solubilisation est montée à proximité immédiate de chacun des tambours (25a, 25b, 26a, 26b), chaque barre de solubilisation étant positionnée de façon à être tangente à une section tournant vers le haut du tambour adjacent.

8. Appareil selon la revendication 1, dans lequel ledit moyen à filtre (13) comporte plusieurs éléments en coins (41) fixés à proximité étroite les uns des autres, dans une disposition coplanaire, par la base des coins, et façonnés en une forme cylindrique, la base des coins formant la surface extérieure du filtre et le sommet des coins formant la surface intérieure du filtre pour définir un intervalle convergent (42) entre des coins adjacents.

9. Appareil selon la revendication 3, dans lequel lesdits moyens d'alimentation (11) comprennent une trémie (15) destinée à emmagasiner des particules déshydratées, ladite trémie ayant une sortie (16) pour décharger les particules déshydratées, un rouleau (19) de dosage monté à proximité immédiate et au-dessous de ladite sortie pour réguler le débit de particules déchargées de la trémie, un moyen à plateau incliné vibrant (20) d'alimentation monté au-dessous du rouleau de dosage pour recevoir des particules déshydratées déchargées du rouleau de dosage, l'extrémité du moyen à plateau d'alimentation éloignée du rouleau de dosage étant positionnée pour déposer un rideau de particules déshydratées sur sensiblement toute la longueur axiale de l'un desdits tambours (25a, 25b, 26a, 26b) des paires de tambours tournant en sens contraires.

10. Appareil selon la revendication 9, dans lequel ledit moyen à plateaux d'alimentation comprend un premier plateau incliné (20) ayant une extrémité d'entrée montée au-dessous dudit rouleau de dosage et une extrémité de décharge positionnée au-dessus de l'un des tambours de la paire de tambours (25a, 25b, 26a, 26b) tournant dans des sens contraires dans la cuve (12) de dissolution, et un second plateau incliné (22) d'alimentation monté sur la surface inférieure dudit premier plateau d'alimentation, à proximité immédiate de son extrémité de décharge, et s'étendant dans une direction opposée à celle du premier plateau d'alimentation, ledit second plateau d'alimentation ayant une extrémité de décharge positionnée au-dessus d'un tambour de l'autre paire de tambours tournant en sens contraires, le premier plateau d'alimentation présentant plusieurs ouvertures espacées (23), s'étendant sur la largeur du plateau au-dessus dudit second plateau d'alimentation, afin qu'une partie des particules déshydratées portées sur le premier plateau d'alimentation tombe à travers lesdites ouvertures sur le second plateau d'alimentation et en soit déchargée, et afin que la partie restante des particules déshydratées passe entre les ouvertures espacées et soit déchargée de l'extrémité du premier plateau d'alimentation.

11. Appareil selon la revendication 10, dans lequel les ouvertures (23) du premier plateau (20) d'alimentation sont espacées d'une distance au moins égale à la largeur des ouvertures.

12. Procédé pour mouiller et dissoudre des particules déshydratées, finement divisées, dans un liquide qui consiste,
à établir une masse de liquide (14) dans une cuve (12),
à monter au moins une paire de tambours (25a, 25b, 26a, 26b), tournant en sens contraires, dans la cuve, les tambours étant partiellement immergés dans la masse de liquide et les tambours de chaque paire de tambours tournant en sens contraires étant montés de façon à être parallèles et à proximité étroite l'un de l'autre pour qu'une zone de serrage (27) soit définie entre les tambours tournant en sens contraires,
à faire tourner les tambours de manière que les deux tambours de chaque paire de tambours tournant en sens contraires soient en rotation dans un sens allant vers ladite zone de serrage, et afin qu'une couche du liquide adhère à la surface de chaque tambour pendant qu'il sort en tournant de ladite masse de liquide,
à déposer une couche de particules déshydratées sur la couche de liquide située sur la surface d'un tambour tournant de chaque paire de tambours tournant en sens contraires, afin que les particules soient mouillées et forment des grumeaux de poudre mouillés sur la surface des tambours,
à transporter les particules mouillées et les grumeaux de poudre mouillés sur la surface des tambours et les faire passer dans ladite zone de serrage pour comprimer, malaxer et fragmenter pratiquement tous les grumeaux de poudre, et jusque dans la masse de liquide pour dissoudre les particules mouillées,
à faire tourner chacun desdits tambours jusque dans un intervalle convergent formé par une barre fixe (28) montée dans la masse de liquide, tangentiellement à une section tournant vers le haut de chacun des tambours afin que pratiquement tous les grumeaux de poudre mouillés soient soumis à une abrasion et soient désintégrés pendant le passage dans ledit intervalle convergent et soient dissous dans ledit liquide,
à faire sortir de la cuve la solution liquide contenant des particules dissoutes,
à faire passer le liquide sorti de la cuve dans plusieurs intervalles convergents (42) dans un filtre cylindrique (13) afin que tous grumeaux de poudre restant dans le liquide soient soumis à une abrasion, un cisaillement et une désintégration en passant dans les intervalles avec les particules dissoutes dans le liquide, et
à décharger dudit filtre le liquide qui est débarrassé des grumeaux de poudre.

13. Procédé selon la revendication 12, dans lequel les particules déshydratées comprennent des fines de café ayant une dimension moyenne de particules d'environ 75 à 120 micromètres.

14. Procédé selon la revendication 13, dans lequel le liquide est une liqueur de café concentrée ayant une teneur en substances solides d'environ 25 % ou plus et une température d'environ 5°C à 60°C, la teneur en substances solides de la liqueur étant augmentée d'environ 3 % à 5 % ou plus et la température de la liqueur étant élevée d'environ moins de 10°C pendant la période de séjour de la liqueur dans ladite cuve (12).

15. Procédé suivant la revendication 12, dans lequel deux paires de tambours (25a, 25b, 26a, 26b) tournant en sens contraires sont prévues dans la cuve (12), les particules en poudre étant déposées sur un tambour de chaque paire de tambours, afin que les grumeaux de poudre mouillés formés sur la surface de tambour soient entraînés dans la zone de serrage (27) des deux paires de tambours pour que les grumeaux de poudre soient comprimés, malaxés et fragmentés dans les deux paires de tambours.

16. Procédé suivant la revendication 12, dans lequel on fait passer le liquide sorti de la cuve (12) dans des intervalles convergents ayant une largeur d'environ 0,075 mm à 0,20 mm.
